# EUROPÄISCHE PATENTSCHRIFT

(11) **EP 3 782 891 B1**
(45) Veröffentlichungstag und Bekanntmachung des Hinweises auf die Patenterteilung: **07.12.2022**
(21) Anmeldenummer: 20000303.6
(22) Anmeldetag: 20.08.2020
(51) Int. Cl.: B62J 45/40, B62M 9/1242, B62M 9/1244, B62M 9/128

(54) **FAHRRADSCHALTWERK MIT EINSTELLANZEIGE**
BICYCLE DERAILLEUR WITH ADJUSTMENT DISPLAY
DÉRAILLEUR DE BICYCLETTE POURVU D'AFFICHAGE DE RÉGLAGE

(30) Priorität: 23.08.2019 DE 102019005942; 14.08.2020 DE 102020210354
(43) Veröffentlichungstag der Anmeldung: 24.02.2021
(73) Patentinhaber: SRAM Deutschland GmbH, 97424 Schweinfurt (DE)
(72) Erfinder: Braedt, Henrik, 97456 Dittelbrunn/OT Hambach (DE); Heyna, Sebastian, 97456 Dittelbrunn/OT Hambach (DE)

(56) Entgegenhaltungen:
- EP-A1- 3 190 039
- EP-A2- 3 388 324
- FR-A5- 2 154 018
- US-A1- 2019 016 412

## Beschreibung

### Stand der Technik

Einfachantriebe (mit nur einem Kettenrad) mit weit gespreizten Zahnkranzkassetten (mit einer Gangspreizung der Kassette zwischen der größten und der kleinsten Übersetzung beispielsweise von 400 % oder mehr) haben sich an höherwertigen Mountainbikes in den letzten Jahren durchgesetzt.

Unter anderem, um Bedienkräfte beim Schalten zwischen den verschiedenen Übersetzungen der Kassette gering zu halten, werden in Kombination mit derartigen Kassetten vornehmlich Schaltwerke mit nicht geneigtem oder mit nur wenig geneigtem Parallelogramm verbaut. Derartige Schaltwerke sind beispielsweise aus den Druckschriften DE 10 2012 204 452 A1 oder EP 3 388 324 A3 (EP'324) bekannt. Dokument EP3190039A1 zeigt die Präambel des Anspruch 1.

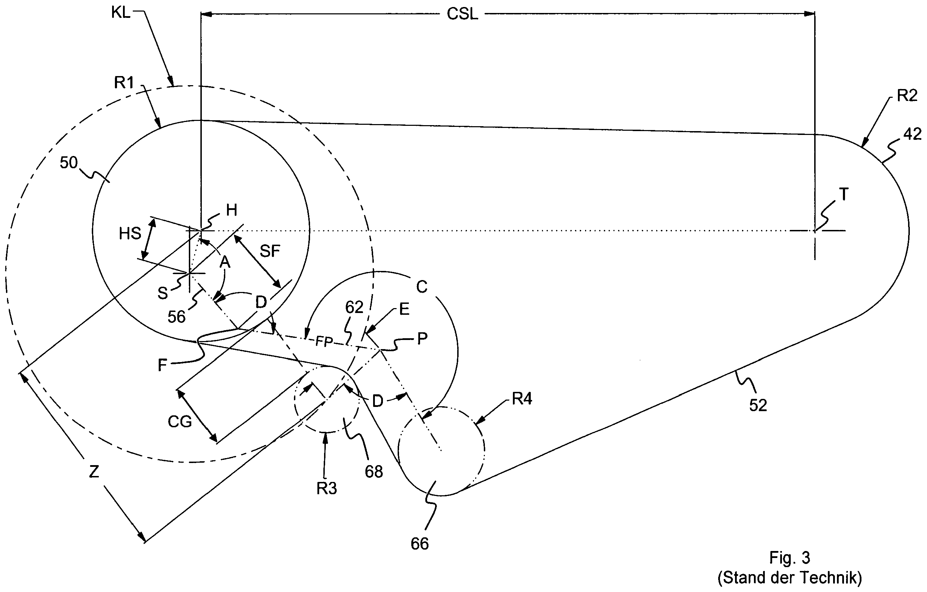

Um bei allen verschiedenen Übersetzungen einen geeigneten Chain-Gap CG (Abstand zwischen oberem Kettenführungsröllchen und Referenzritzel, vergleiche beigefügte Figur 3) einzuhalten, ist bei derartigen Schaltwerken der Abstand zwischen der oberen Kettenleitrolle 68 des Schaltwerks und der Schwenkachse P (vergleiche beigefügte Figur 3) des P-Knuckle im Vergleich zu herkömmlichen Schaltwerken mit Schrägparallelogramm deutlich vergrößert.

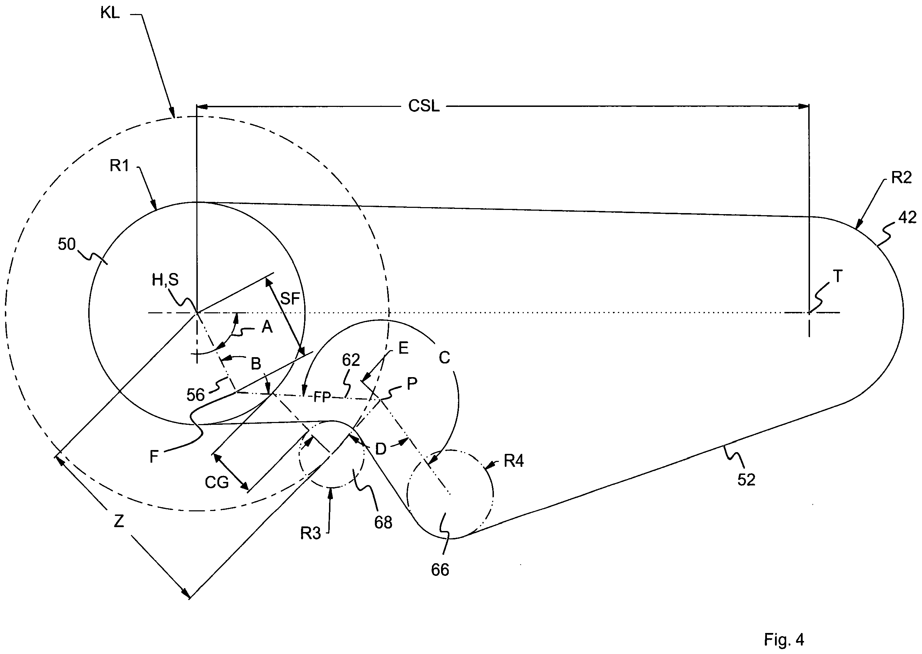

Eine Folge hiervon ist, dass der Chain Gap CG bei derartigen Schaltwerken stärker von der Kettenlänge sowie von anderen Faktoren abhängt, wie u. a. von einer etwaigen Rahmen-Federungskinematik mit sog. Chainstay Growth (Änderung des Abstands CSL, vergleiche Figuren 3 und 4, zwischen Tretlagerwelle T und Hinterradachse H beim Einfedern) oder mit sog. Sag-Position (Negativfederweg) sowie von dem mit der Zeit auftretenden Kettenverschleiß. Hierdurch reagiert der Antriebsstrang bei derartigen Schaltwerken mit nicht oder wenig geneigtem Parallelogramm insgesamt deutlich sensibler auf die vorgenommene Einstellung des bzw. auf die tatsächliche Größe des Chain-Gap CG als bei herkömmlichen Schaltwerken mit Schrägparallelogramm.

Der Chain-Gap spielt somit insbesondere bei den vorgenannten Schaltwerken mit nicht oder wenig geneigtem Parallelogramm eine zentrale Rolle bei der Einstellung des Schaltsystems. Er ist maßgeblich dafür verantwortlich, dass die Formelemente für Schalt- und Abweisfunktion an den Ritzeln der Zahnkranzkassette korrekt zum Einsatz kommen können, dass somit die Kette exakt an den dafür vorgesehenen Rotationspositionen der Kassette schaltet, und dass insgesamt keine Bauteile des Systems durch schlechte Schaltqualität oder Kollisionen beschädigt werden.

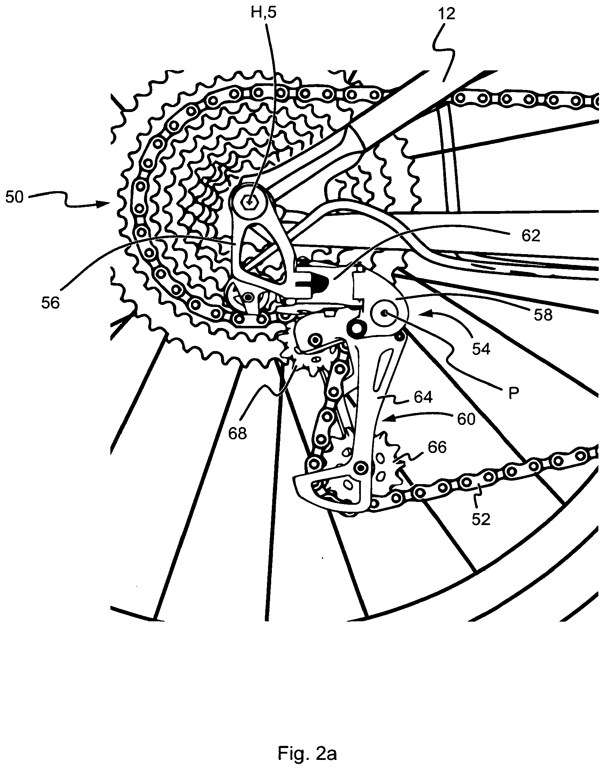

Ein Schaltwerk ist zur Einstellung des Chain-Gap CG üblicherweise drehbar (Drehwinkel A in Figuren 3 und 4) um eine Schwenkachse (nachfolgend auch bezeichnet als B-Achse) am Schaltauge bzw. Rahmen befestigt. Diese Schwenkachse S kann konzentrisch (vergleiche Figur 2a und Figur 4) oder parallelverschoben zur Ritzelachse (Hinterradachse H) (vergleiche Figur 3) angeordnet sein.

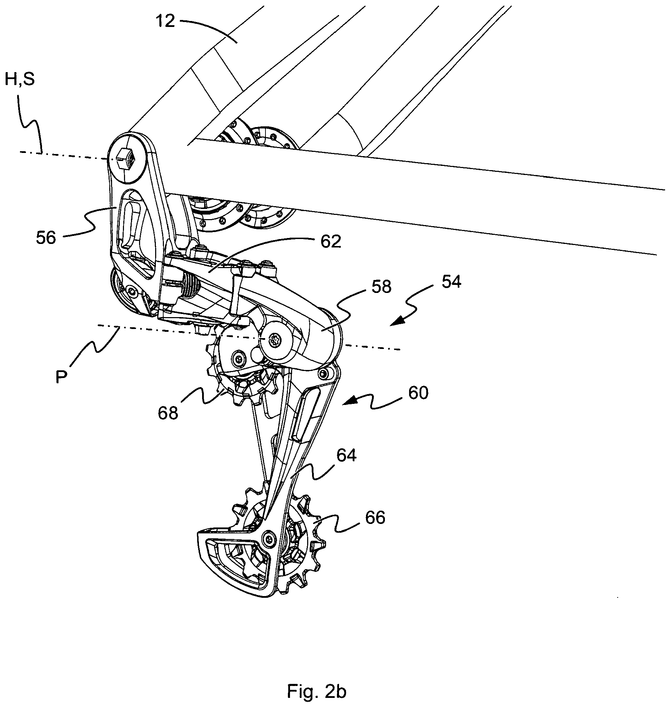

Durch die Verdrehung des B-Knuckles 56 (vergleiche Figuren 3 und 4, auch bekannt als "Basiselement", vgl. Figur 2a/2b), und damit des gesamten Schaltwerks um den Drehwinkel A relativ zum Ausfallende des Fahrradrahmens kann der Chain Gap CG, also der Abstand der Kettenleitrolle 68 (obere Rolle im Kettenkäfig) bzw. des Kettenkäfigs zu einem Kassettenritzel (Referenzritzel) eingestellt werden. Für diese Einstellung des für eine optimale Funktion des Antriebsstrangs erforderlichen Chain-Gap CG sind insbesondere die folgenden Hilfsmittel bekannt:
- Messmittel (Messchieber, Maßstab)
- Einstelllehre
- Markierung auf dem Schaltwerks-Außenkäfig

Bei jedem dieser Hilfsmittel wird die Schaltwerkseinstellung anhand einer direkten Distanzmessung des Chain-Gap (bzw. durch entsprechende Lehrung mittels Einstelllehre oder mittels Markierung) zwischen Schaltwerk und Kassettenritzel durchgeführt. In der Regel wird hierbei das größte oder zweitgrößte Kassettenritzel als Referenzritzel genutzt.

Für unterschiedliche Fahrräder mit voneinander abweichenden Kettenstrebenlängen CSL und/oder mit unterschiedlichen Zähnezahlen an Kassette und Kettenblatt unterscheidet sich jeweils die für den korrekten Betrieb des Antriebsstrangs benötigte Kettenlänge. Bei vollgefederten Fahrrädern wird die Kettenstrebenlänge zudem von den bereits eingangs erwähnten Einfederbewegungen beeinflusst.

Aufgrund des festen Teilungsmaßes der Kettenglieder und aufgrund der alternierenden Anordnung von Innenlaschen und Außenlaschen der Kette kann die Kettenlänge und damit der Chain Gap grundsätzlich jedoch nur in relativ groben Schritten entsprechend des zweifachen Ketten-Teilungsmaßes angepasst werden. Daher wird zur Feineinstellung des Chain Gaps üblicherweise der Winkel A zwischen Schaltwerk und Rahmen-Ausfallende verändert.

### Probleme der Chain-Gap Einstellung gemäß Stand der Technik

1. Bei Schaltwerken mit parallel zur Ritzelachse verschobener Drehachse (vergleiche Figur 3) kommt es beim Einstellen des Chain-Gap CG (was, wie oben ausgeführt, in der Regel durch eine Änderung des Winkels A realisiert wird) basierend auf den unterschiedlichen Randbedingungen (Kettenstrebenlänge, Zähnezahlen an Kettenblatt und Kassette, Abstand des Schaltauges von der Hinterachse und Winkel zur Kettenstrebe sowie Größe und Anordnung der Komponenten des Schaltwerks etc.) zu unterschiedlichen resultierenden Winkeln C bei jeweils gleich großem Chain Gap. Daher muss, wie oben ausgeführt, der Chain Gap direkt zwischen Schaltwerk und Kassette gemessen/geprüft werden. Es kann bei diesen Schaltwerken prinzipiell kein allgemein idealer Winkel C für verschiedene Fahrräder gefunden werden.
2. Bei Schaltwerken mit konzentrischer Anordnung von Ritzelachse und Schaltwerksdrehachse (vergleiche Figur 4) bleibt der Winkel C im Wesentlichen konstant, auch wenn der Winkel A bei der Einstellung des Chain Gaps auf die o. g. Randbedingungen (Kettenstrebenlänge, Zähnezahlen an Kettenblatt und Kassette etc.) variiert, da bei derartigen konzentrisch montierten Schaltwerken der Chain Gap geometrisch nur vom Winkel C, nicht jedoch vom Winkel A abhängig ist. Daher kann in diesem Fall auf eine direkte Messung/Lehrung des Chain Gaps verzichtet werden, und die Größe des Chain Gaps für einen jeweiligen Referenzgang kann stattdessen direkt am Schaltwerk (durch Ermittlung lediglich des Winkels C) überprüft werden. Der bestehende, aber geringe Einfluss der axialen Position des Schaltwerks (Schaltposition bzw. eingelegter Gang) auf den Chain Gap bei richtig gewähltem Referenzgang, insbesondere bei Schaltwerken mit geradem oder wenig geneigtem Parallelogramm, ist dabei vernachlässigbar.

In der Druckschrift EP'324 wurde bereits eine Lösung beschrieben, bei der für die Einstellung des Chain Gaps der Winkel C mittels einer am Schaltwerk befindlichen Einstellarretierung festgelegt Nachteilig an dieser Einstellvariante ist, dass es je nach Konstruktionsweise für den Nutzer schwierig sein kann, den bei der Einstellung erforderlichen Formschluss zwischen den Formelementen der Arretierungseinrichtung herzustellen, da diese Elemente aus der üblichen Sichtrichtung des Bedieners von Bauteilen des Schaltwerks optisch überdeckt sein können. Das kann zu einer unbefriedigenden Nutzung dieser Funktion führen, indem der Winkel vom Nutzer nicht oder falsch festgelegt wird. Des Weiteren ist es für den Nutzer allein nicht möglich, die Güte der Einstellung in Fahrposition - Fahrer sitzt auf dem Fahrrad, Hinterbau gegebenenfalls eingefedert - zu überprüfen. Außerdem ist die Anpassungsfähigkeit der bisherigen Lösung wenig flexibel, da zusätzliche Bauteile für die Einstellarretierung erforderlich sind, oder die Anordnung vorhandener Bauteile negativ beeinflusst wird.

### Beschreibung der Erfindung

Vor dem oben beschriebenen Hintergrund war es Aufgabe der vorliegenden Erfindung, in einem Schaltwerk einen Chain Gap zuverlässiger und komfortabler zu erfassen und eine Einstellung des Chain Gaps zu vereinfachen.

Gemäß der vorliegenden Erfindung wird diese Aufgabe gelöst durch ein Schaltwerk für ein Fahrrad, umfassend eine B-Knuckle-Baugruppe, welche zur Montage an einem Fahrradrahmen oder an einem Schaltauge eingerichtet ist, eine P-Knuckle-Baugruppe, eine Parallelogramm-Baugruppe, über welche die B-Knuckle-Baugruppe und die P-Knuckle-Baugruppe beweglich miteinander verbunden sind, eine Käfigbaugruppe, in der eine Kettenleitrolle und eine Kettenspannrolle drehbar gehalten sind, wobei die Käfigbaugruppe an der P-Knuckle-Baugruppe um eine P-Achse drehbar gelagert ist, und eine Anzeige- bzw. Drehwinkel-Erfassungseinrichtung, welche dafür eingerichtet ist, einen Drehwinkel zwischen der P-Knuckle-Baugruppe und Käfigbaugruppe zu erfassen bzw. anzuzeigen.

Gemäß einem wichtigen Merkmal der Erfindung wird demnach ein Drehwinkel zwischen der P-Knuckle-Baugruppe und der Käfigbaugruppe erfasst und als Maß für den Chain Gap angezeigt. Eine solche Anzeigeeinrichtung kann einfach aufgebaut und komfortabel durch den Nutzer abgelesen werden, so dass der Chain Gap komfortabel kontrolliert werden kann. Dies unterstützt auch die Einstellung eines korrekten Chain Gaps bei der Montage oder Wartung des Schaltwerks.

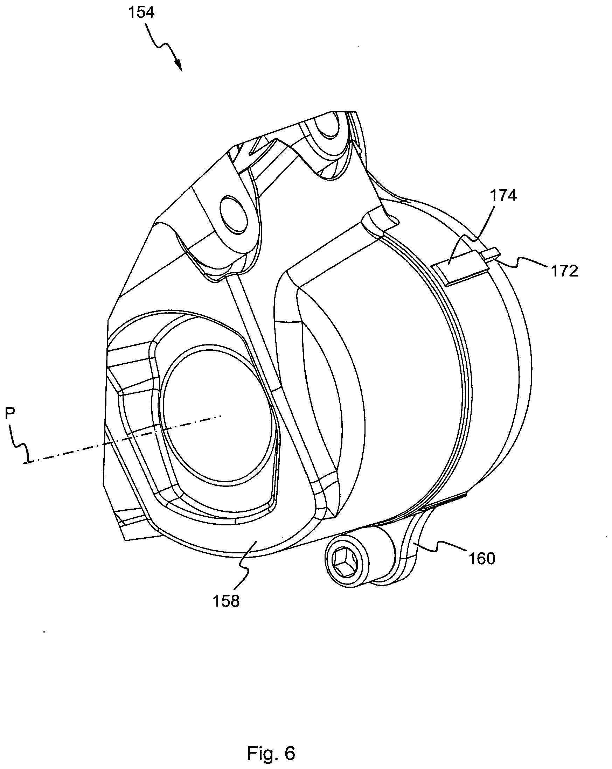

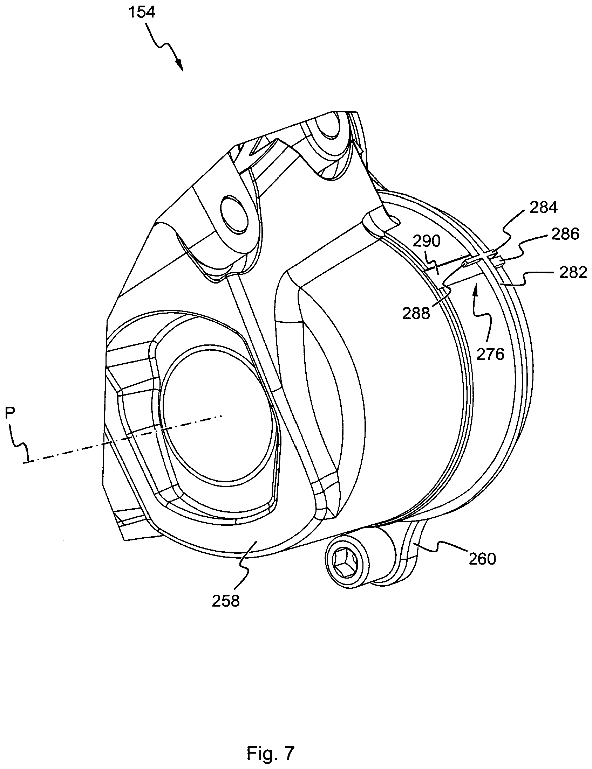

Unter "Drehwinkel" ist im Sinne der vorliegenden Offenbarung insbesondere auch ein Drehwinkelbereich zu verstehen, wie dieser auch den Ausführungsformen beispielsweise gemäß den beigefügten Figuren 6 und 7 sowie der zugehörigen Beschreibung entnommen werden kann, da am Antriebsstrang des Fahrrads seitens des Herstellers stets ein gewisser Ziel-Bereich für den Drehwinkel und damit auch ein gewisser Ziel-Bereich für den angestrebten Chain-Gap vorgeschrieben bzw. zulässig sein wird.

Gemäß einer nicht beanspruchten Ausführungsform, kann die Anzeigeeinrichtung mindestens eine erste Markierung aufweisen, welche an der P-Knuckle-Baugruppe oder/und an der Käfigbaugruppe vorgesehen ist. Auf diese Weise kann die Relativbewegung zwischen P-Knuckle-Baugruppe und Käfigbaugruppe unmittelbar zur Realisierung der Anzeige genutzt werden. Gemäss der Erfindung weist die Anzeigeeinrichtung eine erste Markierung auf, welche an der P-Knuckle-Baugruppe vorgesehen ist, und eine zweite Markierung auf, welche an der Käfigbaugruppe vorgesehen ist.

Die Markierungen können dann entsprechend nah beieinander vorgesehen sein, so dass insbesondere eine vorbestimmte Ausrichtung der beiden Markierungen zueinander einen korrekten Chain Gap anzeigen kann.

Die erste oder zweite Markierung können durch verschiedene Varianten realisiert sein, beispielsweise durch einen Aufkleber, einen Aufdruck, ein Formelement (eine Erhebung oder eine Vertiefung etc.), eine mittels Laser hergestellte Markierung, eine Verfärbung von Material oder ein zusätzlich angebrachtes Bauteil. Derartige Markierungen sind einfach und zuverlässig anbringbar und können ggf. auch nachgerüstet werden. Gleichzeitig sind sie kostengünstig und kommen insbesondere ohne Elektronik, besondere Sensortechnik oder bewegliche Bauteile aus.

In einer weiteren bevorzugten Ausführungsform der Erfindung kann die Anzeigeeinrichtung einen Schleppzeiger aufweisen, welcher einen maximalen Drehwinkel zwischen der P-Knuckle-Baugruppe und der Käfigbaugruppe anzeigt. Dies ist insbesondere von Vorteil, wenn sich der Drehwinkel während einer Verwendung des Schaltwerks ändert, beispielsweise während der Fahrt. Der Schleppzeiger kann drehbar an der P-Knuckle-Baugruppe gelagert sein und die Käfigbaugruppe kann einen Vorsprung aufweisen, welcher dafür eingerichtet ist, den Schleppzeiger während einer Drehbewegung der Käfigbaugruppe um die P-Achse mitzunehmen. Alternativ könnte der Schleppzeiger an der Käfigbaugruppe gelagert und ein Vorsprung zur Mitnahme des Schleppzeigers könnte an der P-Knuckle-Baugruppe angeordnet sein.

In einer einfachen mechanischen Realisierung eines Schleppzeigers kann vorgesehen sein, dass der Schleppzeiger an einer der beiden Baugruppen aus P-Knuckle-Baugruppe und Käfigbaugruppe durch ein Reibungslager mit vorbestimmter Reibungskraft um die P-Achse drehbar gelagert ist und dass das andere der beiden Bauteile ein Mitnahmeelement, insbesondere den Vorsprung, aufweist, welches dafür eingerichtet ist, den Schleppzeiger während einer Drehbewegung zwischen Käfigbaugruppe und P-Knuckle-Baugruppe mitzunehmen.

Um sicherzustellen, dass der Schleppzeiger wenig Bauraum einnimmt und bei seiner Bewegung nicht verkantet, kann der Schleppzeiger als zur P-Achse konzentrischer Ring ausgebildet sein.

In einer weiteren bevorzugten Ausführungsform der Erfindung kann die Anzeigeeinrichtung bzw. Drehwinkel-Erfassungseinrichtung umfassen: einen Winkelsensor zum Erfassen eines den Drehwinkel zwischen der P-Knuckle-Baugruppe und Käfigbaugruppe angebenden Winkelwerts und eine Sendeeinrichtung, welche dafür eingerichtet ist, eine von dem Winkelwert abhängige Erfassungsinformation an eine Empfangseinrichtung zu übertragen. Die Übertragung der Erfassungsinformation kann dabei drahtlos (insbesondere per Funk) oder vermittels eines Kabels erfolgen. Eine mit Winkelsensor und Sendeeinrichtung ausgestattete Anzeigeeinrichtung bzw. Drehwinkel-Erfassungseinrichtung hat den Vorteil, dass eine Information über den Drehwinkel und damit über den Chain Gap an ein für den Nutzer gut zugängliches Anzeige-Interface übermittelt werden kann, so dass der Chain Gap durch den Nutzer noch komfortabler überwacht werden kann. Beispielsweise kann die Sendeeinrichtung die Erfassungsinformation an ein mobiles Endgerät (Smartphone, Fahrradcomputer etc.) oder ein am Fahrrad, beispielsweise am Lenker oder am Rahmen, angeordnetes HMI-Interface (Human Machine Interface) übermitteln.

In einer weiteren bevorzugten Ausführungsform kann die Drehwinkel-Erfassungs- bzw. Anzeigeeinrichtung ferner umfassen: einen Winkelsensor zum Erfassen eines den Drehwinkel zwischen der P-Knuckle-Baugruppe und Käfigbaugruppe angebenden Winkelwerts und ein elektrisches Anzeigemittel, welches als elektronisches Display oder als Leuchtmittel, insbesondere LED, ausgebildet ist, und welches dafür eingerichtet ist, eine von dem Winkelwert abhängige Erfassungsinformation anzuzeigen. Ein elektrisches Anzeigemittel bietet eine gute Ablesbarkeit sowie eine hohe Flexibilität bezüglich der Gestaltung der wiedergegebenen Information. So kann insbesondere durch verschiedenfarbige Leuchtmittel eine Information bezüglich des Chain Gaps sehr zuverlässig und intuitiv ausgegeben werden.

Die erfindungsgemäße Drehwinkel-Erfassungs- bzw. Anzeigeeinrichtung entfaltet besondere Vorteile in einem Schaltwerk, in welchem die B-Knuckle-Baugruppe dafür eingerichtet ist, um eine B-Achse verschwenkbar an einem Fahrradrahmen oder an einem Schaltauge montiert zu werden, wobei die B-Achse koaxial zu einer Hinterradachse eines Fahrrads verläuft.

Wie bereits angedeutet, bezieht sich die Überwachung oder Einstellung des Chain Gaps auf ein vorbestimmtes Referenzritzel, d.h. die Einstellung des Schaltwerks in einen vorbestimmten Referenzgang. Dementsprechend kann das Schaltwerk in einer weiteren bevorzugten Ausführungsform der Erfindung eine Referenzgang-Erfassungseinrichtung umfassen, welche dafür eingerichtet ist, zu erfassen oder/und anzuzeigen, ob das Schaltwerk in eine vorbestimmte Referenzschaltstufe eingestellt ist oder nicht.

In einer konstruktiv einfachen, jedoch zuverlässigen Weise kann eine Referenzgang-Erfassungseinrichtung der vorstehend genannten Art dadurch realisiert sein, dass sie dafür eingerichtet ist, eine Information betreffend eine Relativposition zwischen mindestens zwei Baugruppen aus Fahrradrahmen, B-Knuckle-Baugruppe, Parallelogrammbaugruppe, P-Knuckle-Baugruppe und Käfigbaugruppe zu erfassen oder/und anzuzeigen. Die Funktion einer solchen Referenzgang-Erfassungseinrichtung ist darauf zurückzuführen, dass bei einer Verstellung der Schaltstufen die vorstehend aufgeführten Baugruppen sich jeweils im wesentlichen in zur Hinterradachse paralleler Richtung relativ zueinander bewegen, so dass die Relativposition wenigstens zweier dieser Baugruppen zueinander zu einem bestimmten Zeitpunkt eine Information über eine eingestellte Gangstufe bereitstellen kann.

In einer einfachen Variante der Erfindung kann eine Referenzgang-Erfassungseinrichtung eine Markierung der oben genannten Art aufweisen, beispielsweise einen Aufkleber, einen Aufdruck, ein Formelement, eine mittels Laser hergestellte Markierung, eine Verfärbung von Material, ein zusätzlich angebrachtes Bauteil, oder/und die Referenzgang-Erfassungseinrichtung kann einen Winkelsensor oder eine LED-Anzeige aufweisen. Alternativ oder zusätzlich kann die Referenzgang-Erfassungseinrichtung ein Signal erzeugen, welches angibt, ob das Schaltwerk in eine vorbestimmte Referenzschaltstufe eingestellt ist oder nicht, und das Signal kann durch ein elektronisches Anzeigemittel angezeigt oder/und an eine Anzeigeeinrichtung drahtlos oder per Kabel übermittelt werden. Insbesondere die Übermittlung an die Anzeigeeinrichtung kann dann vorteilhaft dafür genutzt werden, die Anzeige des Chain Gaps oder eines den Chain Gap repräsentierenden Erfassungswerts davon abhängig zu machen, ob der Referenzgang eingelegt ist oder nicht. Im Allgemeinen ist nur bei Einstellung des Referenzgangs eine korrekte Anzeige bzw. Einstellung des Chain Gaps möglich.

Die Erfindung wird nachfolgend anhand eines bevorzugten Ausführungsbeispiels sowie bevorzugter Varianten des Ausführungsbeispiels unter Bezugnahme auf die beigefügten Zeichnungen näher erläutert. Es zeigen:
- Figur 1: eine Seitenansicht eines Fahrrads, an welchem ein Schaltwerk gemäß dem Ausführungsbeispiel der vorliegenden Erfindung montiert ist,
- Figur 2a: eine Vergrößerung eines Ausschnitts aus Figur 1 im Bereich des Schaltwerks,
- Figur 2b: eine perspektivische Ansicht eines Hinterachs-koaxial montierten Schaltwerks ähnlich Fig. 1 und 2a,
- Figur 3: eine schematische Funktionsansicht eines Fahrrad-Antriebsstrangs mit einem konventionellen, hinterachsexzentrisch montierten Schaltwerk gemäß dem Stand der Technik,
- Figur 4: eine schematische Funktionsansicht einer Fahrrad-Antriebsstrangs mit einem Schaltwerk gemäß dem Ausführungsbeispiel der Erfindung,
- Figur 5: eine perspektivische Ansicht zweier verschiedener Drehwinkel-Erfassungs- und Anzeigeeinrichtungen des Schaltwerks des Ausführungsbeispiels, gemäß einer ersten beziehungsweise einer zweiten Variante der Erfindung,
- Figur 6: eine perspektivische Ansicht einer Drehwinkel-Erfassungs- und Anzeigeeinrichtung des Schaltwerks des Ausführungsbeispiels, gemäß einer dritten Variante der Erfindung, und
- Figur 7: eine perspektivische Ansicht einer Drehwinkel-Erfassungs- und Anzeigeeinrichtung des Schaltwerks des Ausführungsbeispiels, gemäß einer vierten Variante der Erfindung.

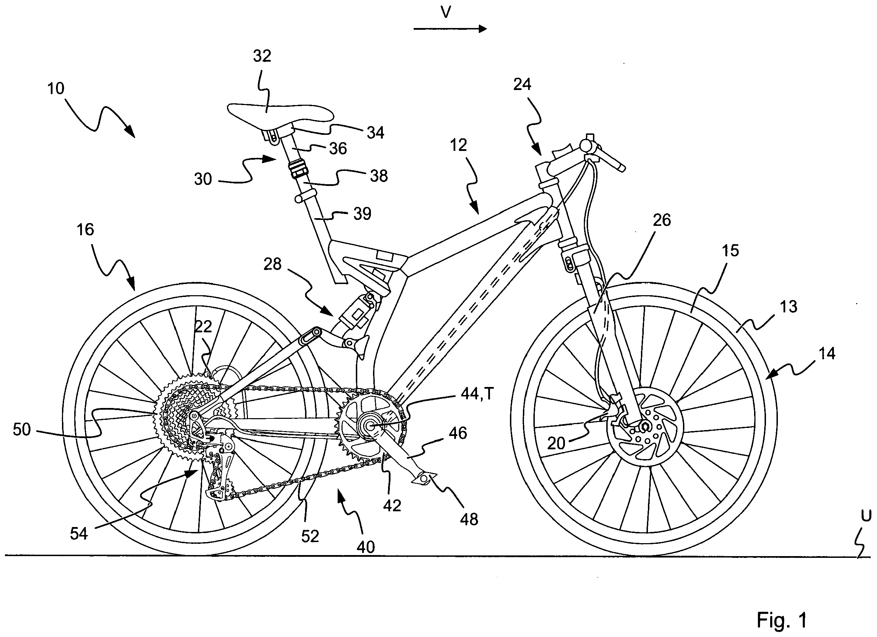

In Figur 1 ist ein Fahrrad 10 vom Mountainbike-Typ dargestellt, welches einen Rahmen 12 sowie ein Vorderrad 14 und ein Hinterrad 16 aufweist, die drehbar am Rahmen 12 angebracht sind. Das Fahrrad 10 kann eine Vorderradbremse 20 zum Bremsen des Vorderrads 14 und eine Hinterradbremse 22 zum Bremsen des Hinterrads 16 aufweisen. Vorder- und Hinterrad 14, 16 können jeweils Reifen 13 tragen, welche auf eine Felge 15 aufgezogen sind, wobei die Reifen 13 dafür eingerichtet sind, auf einer Fahrbahn U abzurollen. Zum Steuern des Vorderrads 14 ist eine Lenkeranordnung 24 vorgesehen. Ein Pfeil V zeigt eine Vorwärtswärtsrichtung oder Fahrtrichtung des Fahrrads 10 entlang der Fahrbahn U an.

Das Vorderrad 14 kann mit dem Rahmen 12 über eine Vorderradfederung oder Federgabel 26 verbunden sein. Das Hinterrad 16 kann mit dem Rahmen über eine Hinterradfederung 28 verbunden sein. Die Hinterradfederung 28 kann eine Kombination aus Federn, Dämpfern oder/und Gelenken umfassen, um eine Federbewegung des Hinterrads relativ zum Rahmen in an sich bekannter Weise zu ermöglichen. Ferner kann das Fahrrad 10 eine einstellbare Sitzbaugruppe 30 aufweisen, um eine Einstellung der Sitzposition zu erlauben. Die Sitzbaugruppe 30 kann einen Sattel 32 umfassen, welcher über einen Sattelstangenkopf 34 an einer oberen Seitenstütze 36 montiert ist. Die obere Sattelstütze 36 kann bezüglich einer unteren Sattelstütze 38 beweglich sein, welche an einem Sattelrohr 39 des Rahmens 12 befestigt ist.

Eine Antriebsanordnung 40 des Fahrrads 10 umfasst vorzugsweise ein vorderes Kettenblatt 42, welches an einem Tretlager 44 um eine Tretlagerachse T drehbar am Rahmen 12 gelagert ist und in an sich bekannter Weise durch Tretkurbeln 46 und Pedale 48 durch den Nutzer drehend angetrieben wird, ein Ritzelpaket 50, welches koaxial zu einer Hinterradachse H des Hinterrads 16 am Hinterrad 16 befestigt ist und eine Mehrzahl von Ritzeln unterschiedlicher Zähnezahl aufweist, sowie eine Kette 52, welche das Kettenrad 42 und das Ritzelpaket 50 umläuft, um Antriebskraft vom Kettenrad 42 auf das Ritzelpaket 50 zu übertragen.

Um die Kette 52 zwischen den verschiedenen Ritzeln des Ritzelpakets 50 zu schalten, ist ein hinteres Schaltwerk 54 vorgesehen, welches nachfolgend unter Bezugnahme auf Figur 2a und Figur 2b näher erläutert wird. Das Schaltwerk 54 umfasst eine B-Knuckle-Baugruppe 56, welche drehbar an einem hinteren Ende des Rahmens 12 montiert ist. Eine B-Achse S, um welche die B-Knuckle-Baugruppe 56 drehbar am Rahmen 12 gehalten ist, verläuft konzentrisch zur Hinterradachse H, was der Situation gemäß der Funktionsdarstellung in Figur 4 entspricht.

Das Schaltwerk 54 umfasst ferner eine P-Knuckle-Baugruppe 58, an welcher eine Käfigbaugruppe 60 um eine P-Achse schwenkbar gehalten ist. Die P-Achse verläuft vorzugsweise parallel und im Abstand zur B-Achse S. B-Knuckle-Baugruppe 56 und P-Knuckle-Baugruppe 58 sind durch eine Parallelogrammbaugruppe 62 beweglich miteinander verbunden, wobei bei dieser Bewegung die P-Knuckle-Baugruppe 58 vorzugsweise im Wesentlichen in hinterachs-axialer Richtung relativ zur B-Knuckle-Baugruppe 56 verschoben wird. Diese Bewegung wird durch den Nutzer über ein Schaltkabel oder durch elektrische, gegebenenfalls drahtlose Ansteuerung kontrolliert, wenn das Schaltwerk 54 zur Einstellung verschiedener Schaltstufen betätigt wird.

Die Käfigbaugruppe 60 umfasst einen Käfig 64, in welchem eine Kettenspannrolle 66 und eine Kettenleitrolle 68 jeweils um zur P-Achse parallele Achsen drehbar gehalten sind. Die Kette 52 umläuft das vordere Kettenrad 42, die Kettenspannrolle 66, die Kettenleitrolle 68 und schließlich ein Ritzel des Ritzelpakets 50. Bei Betätigung des Schaltwerks 54 wird die Käfigbaugruppe 60 in der oben beschriebenen Weise im Wesentlichen in einer Richtung parallel zur Hinterradachse H bewegt, so dass die Kette 52 über die Kettenleitrolle 68 auf ein entsprechend fluchtendes Ritzel des Ritzelpakets 50 geführt wird und auf diese Weise eine gewünschte Schaltstufe eingestellt wird.

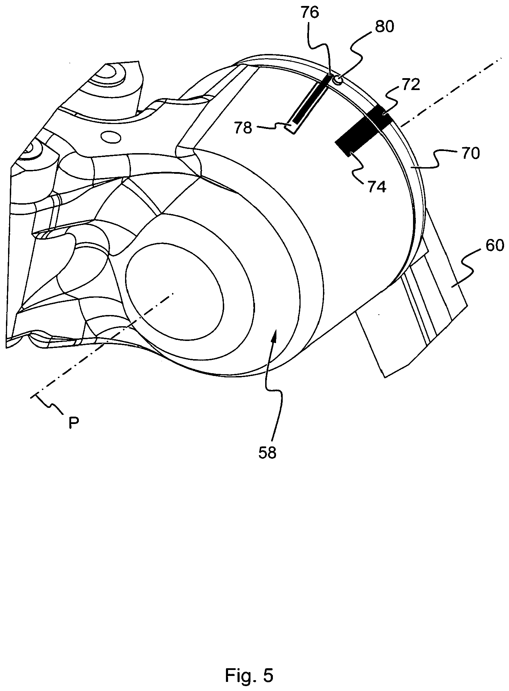

Erfindungsgemäß ist das Schaltwerk 54 mit einer Drehwinkel-Erfassungs- bzw. Anzeigeeinrichtung ausgestattet (in Fig. 1 bis 2b nicht dargestellt), durch welche ein Drehwinkel C zwischen der P-Knuckle-Baugruppe 58 und der Käfigbaugruppe 60 erfasst und angezeigt werden kann. Ausgestaltungsformen einer solchen Erfassungs-/Anzeigeeinrichtung werden nachfolgend unter Bezugnahme auf die Erfindungsvarianten der Figuren 5, 6 und 7 näher erläutert.

Der in Figur 5 gezeigte neue Lösungsansatz wird über eine (alternativ oder zusätzlich zu o.g. Hilfsmitteln wie Lehre oder Markierung vorgesehene) Drehwinkelanzeige auf der P-Knuckle-Baugruppe 58 und der Käfig-Baugruppe 60 realisiert.

Für diese Markierung bzw. Winkelanzeige sind unter anderem folgende Ausführungsvarianten möglich:
- Aufkleber
- Aufdruck
- Formelement (positive/negativ), z. B. auch Bohrungen
- Mit Laser hergestellte Markierung
- Verfärbung des Materials
- Zusätzliche angebrachte Bauteile (z. B. integriert in einer Abdeckung)
- Winkelsensor, z. B. elektronisch
- LED Anzeige

Wie in Figur 5 gezeigt, kann gemäß einer ersten Variante der Erfindung die Käfigbaugruppe 60 ein mitrotierendes Zwischenbauteil 70 aufweisen, welches eine erste Markierung 72 trägt. An der P-Knuckle-Baugruppe 58 kann eine zweite Markierung 74 angeordnet sein. Erste Markierung 72 und zweite Markierung 74 können so eingerichtet sein, dass sie bei korrektem Chain Gap CG miteinander fluchten.

Gemäß einer zweiten Variante der Erfindung kann die Anzeige (alternativ oder zusätzlich) auch so realisiert sein, dass ein Zeiger im Sinne eines zum Beispiel an der P-Knuckle-Baugruppe 58 gelagerten Schleppzeigers 76 vorgesehen wird, der den maximalen Winkel C anzeigt, welcher (beispielsweise beim Aufsitzen und entsprechendem Erreichen der Sag-Position der Hinterbaufederung, oder im Fahrbetrieb) erreicht wurde. Dazu werden neben dem mitlaufenden Schleppzeiger 76 eine oder mehrere Markierungen an Käfigbaugruppe 60 oder P-Knuckle-Baugruppe 58 benötigt, anhand derer die erreichte Position des Schleppzeigers 76 abgelesen und bewertet werden kann, beispielsweise eine an der P-Knuckle-Baugruppe 58 angeordnete Zielmarkierung 78 für den Schleppzeiger 76 bei korrekter Einstellung des Chain Gaps CG. Der Schleppzeiger kann bei einer Drehbewegung der Käfigbaugruppe 60 relativ zur P-Knuckle-Baugruppe 58 durch einen Vorsprung 80 mitgenommen werden, welcher zum Beispiel am Zwischenbauteil 70 der Käfigbaugruppe 60 vorgesehen ist.

Als Referenzritzel wird bei jeder Chain Gap-Einstellung ein einziges Ritzel (Referenzritzel) gewählt, da sich aufgrund unterschiedlicher Bauteilkombinationen und - geometrien (Fahrradrahmen, Übersetzungsverhältnis, Zähnezahlen an Ritzelpaket und Kettenblatt, Kettenlänge, etc. wie o.g.) die Chain-Gaps an verschieden großen Ritzeln von dem am Referenzritzel eingestellten Sollwert unterscheiden. Das heißt, nur mit der Kette auf dem vorgesehene Referenzritzel entspricht der Chain Gap genau dem gewünschten Maß, und entsprechend ist nur auf diesem Ritzel die Beziehung zwischen dem Winkel C und dem Chain-Gap CG auf den gewünschten Wert festgelegt. Es kann jedoch sinnvoll sein, für Fahrräder mit unterschiedlichen Rahmengeometrien unterschiedliche Referenzritzel zu wählen.

Bei der Einstellung im Montageständer, ohne Berücksichtigung des Negativfederwegs, kann es erforderlich sein, für den Chain Gap ein anderes als das Sollmaß einzustellen, damit sich im Betriebszustand bei belasteter Federung und damit beim Erreichen des Negativfederwegs der gewünschte Chain Gap ergibt. Dadurch kann bei der Montage der Einfluss des Federungssystems auf den Chain Gap kompensiert werden.

Dank der Erfindung kann nun der korrekte Wert für den Chain Gap einfach beim Aufsitzen des Fahrers mit einem Blick auf die Markierungen 72, 74, 76, 78 an P-Knuckle-Baugruppe 58 und Käfigbaugruppe 60 kontrolliert werden. Bei der Verwendung eines Schleppzeigers 76 kann auch nach dem Absteigen kontrolliert werden, ob ein korrekter Wert bzw. Wertebereich für den Chain Gap beim Aufsitzen bzw. im Betrieb erreicht wurde (ähnlich wie bei den bekannten verschiebbaren O-Ringen an Federgabel oder Rahmendämpfer).

Wurde das System einmal korrekt eingestellt, kann eine sich später einstellende Abweichung des Chain Gap vom Soll, beispielsweise durch anfängliches Setzverhalten bezüglich der Rotationsposition zwischen Schaltwerk und Ausfallende, oder durch Kettenverschleiß, kontrolliert werden. Nachdem ein etwaiges Setzverhalten abgeschlossen ist, wird es mit der Erfindung somit ferner auch möglich, den Kettenverschleiß näherungsweise zu ermitteln (beispielsweise durch Blick auf die Chain Gap-Anzeige des Schaltwerks, oder auch durch eine elektronische Fernanzeige), und dem Fahrer somit anzuzeigen, wann ein Kettenwechsel ratsam wäre. Diese Anzeige kann zudem einen Hinweis darauf geben, dass eine Justage des Schaltwerks erforderlich ist, indem für den Wert des Chain Gap z. B. verschiedenfarbige Anzeigebereiche vorgesehen werden. Des Weiteren wird es aufgrund der Erfindung möglich, dem Fahrer anzuzeigen, ob die gewählte Kettenlänge zu lang ist. In diesem Fall schwenkt der Schaltwerkskäfig weit nach hinten, und die wie oben vorgeschlagene Anzeige signalisiert dem Nutzer die zu lange Kette.

Beispielsweise mit Hilfe eines Schleppzeigers 76 kann auch der während der Fahrt maximal aufgetretene Winkel C überprüft werden, welcher ein Indiz dafür sein kann, ob die gewählte Kette zu kurz oder grenzwertig kurz ist.

Dies kann auch mit Hilfe von Datenübertragung auf ein mobiles Gerät (Mobilfunkgerät, Fahrradcomputer, Navigationsgerät etc.) oder eine am Fahrrad integrierte Komponente (Motorsteuerelemente, elektronische Anzeigen, etc.) erfolgen.

Um für die Einstellung des Chain Gap die korrekte Wahl des Referenzgangs zu signalisieren, können beispielsweise B-Knuckle-Baugruppe und Schaltwerk-Kabelspule mit korrespondierenden Markierungen oder mit einer Winkelanzeige versehen sein.

Für diese Markierung bzw. Winkelanzeige sind unter anderem folgende Ausführungsvarianten möglich:
- Aufkleber
- Aufdruck
- Formelement (positive/negativ), z. B. auch Bohrungen
- Mit Laser hergestellte Markierung
- Verfärbung des Materials
- Zusätzliche angebrachte Bauteile (z. B. integriert in einer Abdeckung)
- Winkelsensor, z. B. elektronisch
- LED Anzeige

Alternativ können zu demselben Zweck auch Elemente der Parallelogrammbaugruppe und der B-Knuckle-Baugruppe mit korrespondierenden Markierungen oder mit einer Winkelanzeige versehen sein. Weiter alternativ ist es in ähnlicher Weise möglich, Elemente der Parallelogramm-Baugruppe und P-Knuckle-Baugruppe mit korrespondierenden Markierungen oder mit einer Winkelanzeige für die korrekte Auswahl des Referenzgangs zu versehen.

### Erläuterung der insbesondere in den Figuren 3 und 4 verwendeten Bezugszeichen

### Dimension A:

Winkel zwischen B-Knuckle-Baugruppe 56 und Schaltauge/Rahmen 12, zur Einstellung des Chain Gap CG verstellbar. Der Winkel A wird bei der Schaltwerksmontage bzw. nach der Einstellung des Chain Gap CG gegen den Uhrzeigersinn verdrehgesichert fixiert.

### Dimension B:

Winkel zwischen Parallelogrammebene 62 und B-Knuckle-Baugruppe 56, konstruktiv festgelegt.

### Dimension C:

Winkel zwischen Käfigbaugruppe 60 und Baugruppe bestehend aus P-Knuckle-Baugruppe 58, B-Knuckle-Baugruppe 56 und Parallelogrammbaugruppe 62, welche in der P-Knuckle-Baugruppe 58 gegeneinander drehbar gelagert sind.

### Dimension D:

Winkel zwischen Verbindungslinien von jeweils Kettenrollenachse und P-Knuckle-Schwenkachse P, konstruktiv festgelegt.

### Dimension E:

Abstand zwischen Kettenleitrollenachse der oberen Kettenleitrolle 68 und der Schwenkachse P der P-Knuckle-Baugruppe 58.

### Dimension Z:

Abstand zwischen Ritzelachse H (Hinterradachse) und Achse der oberen Kettenleitrolle 68. Aus dem Zusammenhang aus Kettenleitrollenradius R3, Ritzelradius R1 und Abstand Z ergibt sich der Chain-Gap CG.

### Dimension CSL:

Abstand zwischen der Drehachse H des Hinterrads und der Drehachse T des Tretlagers. Kann durch Einfederbewegungen variieren (Chainstay Growth).

### Dimension HS:

Abstand zwischen Hinterradachse H und Schwenkachse S (B-Achse) der B-Knuckle-Baugruppe 56.

### Dimension SF:

Länge der B-Knuckle-Baugruppe 56.

### Dimension FP:

Länge der Parallelogrammbaugruppe 62 (Parallelogrammlänge).
- R1:: Teilkreisdurchmesser eines Referenzritzels
- R2:: Teilkreisdurchmesser eines Kettenblatts 42
- R3:: Teilkreisdurchmesser der Kettenleitrolle 68 (obere Rolle im Kettenkäfig)
- R4:: Teilkreisdurchmesser der Kettenspannrolle 66 (untere Rolle im Kettenkäfig)
- KL:: Bewegungskurve der Achse der Kettenleitrolle 68.

Unter Bezugnahme auf Figur 6 wird nachfolgend eine dritte Variante einer Drehwinkel-Erfassungs- bzw. Anzeigeeinrichtung erläutert, welche für ein Schaltwerk gemäß dem Ausführungsbeispiel vorgesehen ist. Die dritte Variante ist eine Modifikation der in Figur 5 gezeigten und vorstehend beschriebenen ersten Variante. Im Folgenden wird nur auf die Unterschiede gegenüber der ersten Variante näher eingegangen und im Übrigen auf die vorstehende Beschreibung verwiesen. Gleiche oder entsprechende Bauteile bzw. Komponenten sind mit um 100 erhöhten Bezugszeichen bezeichnet.

Ein Schaltwerk 154 gemäß der dritten Variante umfasst eine P-Knuckle-Baugruppe 158 und eine daran um eine P-Achse drehbar gehaltene Käfigbaugruppe 160. Im Bereich des Drehlagers, an welchem die Käfigbaugruppe 160 um die P-Achse drehbar an der P-Knuckle-Baugruppe 158 gelagert ist, weist die Käfigbaugruppe 160 eine erste Markierung 172 auf, welche als Erhebung oder Einprägung gestaltet sein kann. Im illustrierten Ausführungsbeispiel ist eine Erhebung oder ein Vorsprung in einem der P-Knuckle-Baugruppe 158 benachbarten Abschnitt der Käfigbaugruppe 160 angeordnet. An der P-Knuckle-Baugruppe 158 ist eine zweite Markierung 174 vorgesehen, welche ebenfalls als Einprägung oder Erhebung ausgestaltet sein kann. In der Variante gemäß Figur 6 ist auch die zweite Markierung 174 als Erhebung bzw. Vorsprung an einer der Käfigbaugruppe 160 benachbarten Position vorgesehen.

Die Positionen von erster Markierung 172 und zweiter Markierung 174 in Umfangsrichtung bezüglich der P-Achse sind so gewählt, dass der Winkel C einen vorbestimmten Sollwert, bzw. Sollwert-Bereich entsprechend der Breite der Markierung 174 in Umfangsrichtung, annimmt (und damit der Chain Gap CG einen vorbestimmten Sollwert bzw. Sollwert-Bereich annimmt), wenn die beiden Markierungen 172, 174 zueinander ausgerichtet sind, bzw. miteinander fluchten oder überlappen.

Erste und zweite Markierungen 172, 174 sind vorzugsweise an einer in Fahrtrichtung weisenden Seite der P-Knuckle-Baugruppe 158 bzw. der Käfigbaugruppe 160 angeordnet, so dass ein Fahrer die Markierungen 172, 174 während der Fahrt bzw. während des Haltens des Fahrrads bequem ablesen kann. Die Erhebungen der Markierungen 172, 174 können materialeinheitlich bzw. integral mit P-Knuckle-Baugruppe 158 bzw. Käfigbaugruppe 160 vorgesehen sein. Alternativ können sie als separate Bauteile auf den Oberflächen von P-Knuckle-Baugruppe 158 und Käfigbaugruppe 160 befestigt sein.

Unter Bezugnahme auf Figur 7 wird nachfolgend eine vierte Variante eines erfindungsgemäßen Schaltwerks beschrieben. Die vierte Variante ist eine Abwandlung der zweiten Variante, so dass im Folgenden nur auf die Unterschiede zur zweiten Variante näher eingegangen wird, und im Übrigen auf die vorstehende Beschreibung der zweiten Variante verwiesen wird. Gleiche oder entsprechende Merkmale bzw. Komponenten sind mit um 200 erhöhten Bezugszeichen bezeichnet.

Ein Schaltwerk 254 gemäß der vierten Variante umfasst eine P-Knuckle-Baugruppe 258 und eine Käfigbaugruppe 260, welche an einem Drehlager um eine P-Achse drehbar miteinander gehalten sind. Zur Erfassung eines Drehwinkels C zwischen Käfigbaugruppe 260 und P-Knuckle-Baugruppe 258 ist in der vierten Variante ein Schleppzeiger 276 vorgesehen. Der Schleppzeiger 276 weist einen Lagerring 282 auf, welcher die P-Achse konzentrisch umläuft und an der P-Knuckle-Baugruppe 258 durch ein Reiblager drehbar gelagert ist. Das Reiblager erlaubt eine Rotation des Lagerrings 282 relativ zur P-Knuckle-Baugruppe 258 um die P-Achse, sofern eine vorbestimmte Reibungskraft überwunden wird. Die vorbestimmte Reibungskraft ist ausreichend groß, um ein unbeabsichtigtes, selbsttägiges Verdrehen des Lagerrings 282 bei Erschütterungen, wie etwa bei der Fahrt, zu verhindern, ist jedoch ausreichend klein, um die betriebsmäßige Schwenkbewegung zwischen P-Knuckle-Baugruppe 258 und Käfigbaugruppe 260 nicht zu behindern, wenn der Schleppzeiger 276 durch die Käfigbaugruppe 260 mitgenommen wird.

Der Schleppzeiger 276 weist ferner einen ersten Vorsprung 284 auf, welcher zu der Käfigbaugruppe 260 hin vorsteht, insbesondere von dem Lagerring 282 aus in etwa axialer Richtung bezüglich der P-Achse zur Käfigbaugruppe 260 hin vorsteht. Dieser erste Vorsprung 284 ist dafür eingerichtet, von einem zweiten Vorsprung 286 kontaktiert zu werden, welcher an der Käfigbaugruppe 260 vorgesehen ist. Bei einer Drehung der Käfigbaugruppe 260 um die P-Achse kann somit der zweite Vorsprung 286 den ersten Vorsprung 284 kontaktieren und im Umfangsrichtung um die P-Achse mitnehmen, so dass der Schleppzeiger 276 unter Überwindung der vorbestimmten Reibungskraft um die P-Achse gedreht wird.

Der Schleppzeiger 276 umfasst vorzugsweise ferner eine erste Markierung 288. Im Ausführungsbeispiel ist die erste Markierung 288 als ein von dem Lagerring 282 aus im Wesentlichen parallel zur P-Achse in Richtung zur P-Knuckle-Baugruppe 258 hin vorstehender Vorsprung ausgestaltet. Insbesondere können die Vorsprünge 288 und 284 in entgegengesetzte Richtungen bezüglich der P-Achse von dem Lagerring 282 aus vorstehen. Darüber hinaus können beide Vorsprünge 288, 284 an gleicher Umfangsposition des Lagerrings 282 vorgesehen sein, wie in Figur 7 illustriert ist.

An der P-Knuckle-Baugruppe 258 ist vorzugsweise ferner eine zweite Markierung 290 vorgesehen, durch welche eine Relativposition zwischen Schleppzeiger 276 und P-Knuckle-Baugruppe 258 angezeigt werden kann. Im Ausführungsbeispiel ist die zweite Markierung 290 durch eine Einprägung oder Vertiefung ausgestaltet, so dass der Vorsprung 288 des Schleppzeigers 276 die zweite Markierung 290 ungehindert überstreichen kann. Wie auch in den vorangegangenen Ausführungsbeispielen können erste und zweite Markierungen 288, 290 derart eingerichtet sein, dass eine Überlappung oder ein Fluchten beider Markierungen miteinander einen vorbestimmten korrekten Winkel C, bzw. Bereich des Winkels C entsprechend der Breite der Markierung 290 in Umfangsrichtung, bzw. einen vorbestimmten Sollwert oder Sollwertbereich für den Chain Gap CG anzeigt. Markierungen 288, 290 sind vorzugsweise an einer in Fahrtrichtung V vorderen Seite der P-Knuckle-Baugruppe 258 bzw. der Käfigbaugruppe 260 angeordnet, so dass sie durch einen Nutzer bequem ablesbar sind.

## Patentansprüche

1. Schaltwerk (54) für ein Fahrrad (10), umfassend
- eine B-Knuckle-Baugruppe (56), welche zur Montage an einem Fahrradrahmen eingerichtet ist,
- eine P-Knuckle-Baugruppe (58; 158; 258),
- eine Parallelogramm-Baugruppe (62), über welche die B-Knuckle-Baugruppe (56) und die P-Knuckle-Baugruppe (58; 158; 258) beweglich miteinander verbunden sind,
- eine Käfigbaugruppe (60; 160; 260), in der eine Kettenleitrolle (68) und eine Kettenspannrolle (66) drehbar gehalten sind, wobei die Käfigbaugruppe (60; 160; 260) an der P-Knuckle-Baugruppe (58; 158; 258) um eine P-Achse drehbar gelagert ist,
- eine Drehwinkel-Erfassungseinrichtung (72-80; 172, 174, 276, 290), welche dafür eingerichtet ist, einen Drehwinkel (C) zwischen der P-Knuckle-Baugruppe (58; 158; 258) und der Käfigbaugruppe (60; 160; 260) zu erfassen oder/und anzuzeigen, **dadurch gekennzeichnet, dass** die Drehwinkel-Erfassungseinrichtung (72-80; 172, 174, 276, 290) eine erste Markierung (74, 78; 174; 290) aufweist, welche an der P-Knuckle-Baugruppe (58; 158; 258) vorgesehen ist, und eine zweite Markierung (72, 76; 172; 288) aufweist, welche an der Käfigbaugruppe (60; 160; 260) vorgesehen ist.

2. Schaltwerk (54) nach Anspruch 1, **dadurch gekennzeichnet, dass** die erste Markierung (74, 78; 174; 290) oder/und die zweite Markierung (72, 76; 172; 288) durch mindestens eines der folgenden Mittel ausgebildet ist:
- einen Aufkleber
- einen Aufdruck
- ein Formelement,
- eine mittels Laser hergestellte Markierung,
- eine Verfärbung von Material der P-Knuckle-Baugruppe oder/und der Käfigbaugruppe,
- ein zusätzlich angebrachtes Bauteil.

3. Schaltwerk (54) nach Anspruch 1, **dadurch gekennzeichnet, dass** die Drehwinkel-Erfassungseinrichtung einen Schleppzeiger (76; 276) aufweist, welcher einen maximalen Drehwinkel zwischen der P-Knuckle-Baugruppe (58; 258) und der Käfigbaugruppe (60; 260) anzeigt.

4. Schaltwerk (54) nach Anspruch 3, **dadurch gekennzeichnet, dass** der Schleppzeiger (76; 276) drehbar an der P-Knuckle-Baugruppe (58; 258) gelagert ist und dass die Käfigbaugruppe (60; 260) einen Vorsprung (80; 286) aufweist, welcher dafür eingerichtet ist, den Schleppzeiger (76; 276) während einer Drehbewegung der Käfigbaugruppe (60; 260) um die P-Achse mitzunehmen.

5. Schaltwerk (54) nach Anspruch 3, **dadurch gekennzeichnet, dass** der Schleppzeiger (76; 276) an einer der beiden Baugruppen aus P-Knuckle-Baugruppe (58; 258) und Käfigbaugruppe (60; 260) durch ein Reibungslager mit vorbestimmter Reibungskraft um die P-Achse drehbar gelagert ist und dass das andere der beiden Bauteile ein Mitnahmeelement, insbesondere den Vorsprung (80; 286), aufweist, welches dafür eingerichtet ist, den Schleppzeiger (76; 276) während einer Drehbewegung zwischen Käfigbaugruppe (60; 260) und P-Knuckle-Baugruppe (58; 258) mitzunehmen.

6. Schaltwerk (54) nach Anspruch 3, **dadurch gekennzeichnet, dass** der Schleppzeiger (76; 276) als zur P-Achse konzentrischer Ring ausgebildet ist.

7. Schaltwerk (54) nach Anspruch 1, **dadurch gekennzeichnet, dass** die Drehwinkel-Erfassungseinrichtung umfasst:
- einen Winkelsensor zum Erfassen eines den Drehwinkel (C) zwischen der P-Knuckle-Baugruppe (58; 158; 258) und Käfigbaugruppe (60; 160; 260) angebenden Winkelwerts und
- eine Sendeeinrichtung, welche dafür eingerichtet ist, von dem Winkelwert abhängige Erfassungsinformation an eine Empfangseinrichtung zu übertragen.

8. Schaltwerk (54) nach Anspruch 1, **dadurch gekennzeichnet, dass** die Drehwinkel-Erfassungseinrichtung umfasst:
- einen Winkelsensor zum Erfassen eines den Drehwinkel zwischen der P-Knuckle-Baugruppe (58; 158; 258) und Käfigbaugruppe (60; 160; 260) angebenden Winkelwerts und
- ein elektrisches Anzeigemittel, welches als Leuchtmittel, insbesondere LED, ausgebildet ist, und welches dafür eingerichtet ist, eine von dem Winkelwert abhängige Erfassungsinformation anzuzeigen.

9. Schaltwerk (54) nach Anspruch 1, **dadurch gekennzeichnet, dass** die B-Knuckle-Baugruppe (56) dafür eingerichtet ist, um eine B-Achse (S) verschwenkbar an einem Fahrradrahmen (12) montiert zu werden, wobei die B-Achse (S) koaxial zu einer Hinterradachse (H) eines Fahrrads (10) verläuft.

10. Schaltwerk (54) nach Anspruch 1, **dadurch gekennzeichnet, dass** das Schaltwerk eine Referenzgang-Erfassungseinrichtung umfasst, welche dafür eingerichtet ist zu erfassen oder/und anzuzeigen, ob das Schaltwerk (54) in eine vorbestimmte Referenzschaltstufe eingestellt ist oder nicht.

11. Schaltwerk (54) nach Anspruch 10, **dadurch gekennzeichnet, dass** die Referenzgang-Erfassungseinrichtung dafür eingerichtet ist, eine Information betreffend eine Relativposition in zur Hinterradachse (H) paralleler Richtung zwischen mindestens zwei Baugruppen aus Fahrradrahmen (12), B-Knuckle-Baugruppe (56), Parallelogramm-Baugruppe (62), P-Knuckle-Baugruppe (58; 158; 258) und Käfigbaugruppe (60; 160; 260) zu erfassen oder/und anzuzeigen.

12. Schaltwerk (54) nach Anspruch 10, **dadurch gekennzeichnet, dass** die Referenzgang-Erfassungseinrichtung eine Markierung aufweist, welche durch mindestens eines der folgenden Mittel ausgebildet ist:
- einen Aufkleber
- einen Aufdruck
- ein Formelement,
- eine mittels Laser hergestellte Markierung,
- eine Verfärbung von Material der P-Knuckle-Baugruppe (58; 158; 258) oder/und der Käfigbaugruppe (60; 160; 260),
- ein zusätzlich angebrachtes Bauteil,
oder/und dass die Referenzgang-Erfassungseinrichtung einen Winkelsensor oder eine LED-Anzeige aufweist.

13. Schaltwerk (54) nach Anspruch 10, **dadurch gekennzeichnet, dass** die Referenzgang-Erfassungseinrichtung ein Signal erzeugt, welches angibt, ob das Schaltwerk in eine vorbestimmte Referenzschaltstufe eingestellt ist oder nicht, und dass das Signal durch ein elektronisches Anzeigemittel angezeigt oder/und an eine Anzeigeeinrichtung übermittelbar ist.

## Claims

1. Derailleur (54) for a bicycle (10), comprising
- a B-knuckle assembly (56) which is designed for mounting on a bicycle frame;
- a P-knuckle assembly (58; 158; 258);
- a parallelogram assembly (62) by way of which the B-knuckle assembly (56) and the P-knuckle assembly (58; 158; 258) are movably connected to one another;
- a cage assembly (60; 160; 260) in which a chain guide pulley (68) and a chain tension pulley (66) are rotatably held, wherein the cage assembly (60; 160; 260) is mounted on the P-knuckle assembly (58; 158; 258) so as to be rotatable about a P-axis;
- an angle-of-rotation detection device (72-80; 172, 174, 276, 290) which is designed to detect and/or indicate an angle of rotation (C) between the P-knuckle assembly (58; 158; 258) and the cage assembly (60; 160; 260),
**characterized in that** the angle-of-rotation detection device (72-80; 172, 174, 276, 290) has a first marking (74, 78; 174, 290) which is provided on the P-knuckle assembly (58; 158; 258), and has a second marking (72, 76; 172; 288) which is provided on the cage assembly (60; 160; 260).

2. Derailleur (54) according to Claim 1, **characterized in that** the first marking (74, 78; 174; 290) or/and the second marking (72, 76; 172; 288) is/are formed by at least one of the following means:
- a sticker;
- an imprint;
- a shaped element;
- a marking produced by means of laser;
- a change in colour of material of the P-knuckle assembly or/and of the cage assembly;
- an additionally mounted component.

3. Derailleur (54) according to Claim 1, **characterized in that** the angle-of-rotation detection device has a drag pointer (76; 276) which indicates a maximum angle of rotation between the P-knuckle assembly (58; 258) and the cage assembly (60; 260).

4. Derailleur (54) according to Claim 3, **characterized in that** the drag pointer (76; 276) is rotatably mounted on the P-knuckle assembly (58; 258), and **in that** the cage assembly (60; 260) has a projection (80; 286) which is designed to entrail the drag pointer (76; 276) during a rotating movement of the cage assembly (60; 260) about the P-axis.

5. Derailleur (54) according to Claim 3, **characterized in that** the drag pointer (76; 276) is mounted on one of the two assemblies of P-knuckle assembly (58; 258) and cage assembly (60; 260) by way of a friction bearing having a predetermined friction force so as to be rotatable about the P-axis, and **in that** the other of the two components has an entrainment element, in particular the projection (80; 286), which is designed to entrain the drag pointer (76; 276) during a rotating movement between the cage assembly (60; 260) and the P-knuckle assembly (58; 258).

6. Derailleur (54) according to Claim 3, **characterized in that** the drag pointer (76; 276) is formed as a ring which is concentric with the P-axis.

7. Derailleur (54) according to Claim 1, **characterized in that** the angle-of-rotation detection device comprises:
- an angle sensor for detecting an angle value which indicates the angle of rotation (C) between the P-knuckle assembly (58; 158; 258) and the cage assembly (60; 160; 260); and
- a transmitter device which is designed to transmit detection information dependent on the angle value to a receiver device.

8. Derailleur (54) according to Claim 1, **characterized in that** the angle-of-rotation detection device comprises:
- an angle sensor for detecting an angle value which indicates the angle of rotation between the P-knuckle assembly (58; 158; 258) and the cage assembly (60; 160; 260); and
- an electric indicator means which is designed as a lamp, in particular an LED, and which is designed to indicate detection information dependent on the angle value.

9. Derailleur (54) according to Claim 1, **characterized in that** the B-knuckle assembly (56) is designed to be mounted on a bicycle frame (12) so as to be pivotable about a B-axis (S), wherein the B-axis (S) runs coaxially with a rear wheel axis (H) of a bicycle (10).

10. Derailleur (54) according to Claim 1, **characterized in that** the derailleur comprises a reference gear detection device which is designed to detect and/or indicate whether or not the derailleur (54) is set to a predetermined reference shifting stage.

11. Derailleur (54) according to Claim 10, **characterized in that** the reference gear detecting device is designed to detect and/or indicate information concerning a relative position in a direction parallel to the rear wheel axis (H) between at least two assemblies of bicycle frame (12), B-knuckle assembly (56), parallelogram assembly (62), P-knuckle assembly (58; 158; 258) and cage assembly (60; 160; 260).

12. Derailleur (54) according to Claim 10, **characterized in that** the reference gear detection device has a marking which is formed by at least one of the following means:
- a sticker;
- an imprint;
- a shaped element;
- a marking produced by means of laser;
- a change in colour of material of the P-knuckle assembly (58; 158; 258) or/and of the cage assembly (60; 160; 260);
- an additionally mounted component;
or/and **in that** the reference gear detection device has an angle sensor or an LED indicator.

13. Derailleur (54) according to Claim 10, **characterized in that** the reference gear detection device generates a signal which indicates whether or not the derailleur is set to a predetermined reference shifting stage, and **in that** the signal is indicated by an electronic indicator means or/and transmittable to an indicator device.

## Revendications

1. Dérailleur (54) pour une bicyclette (10), comprenant
- un sous-ensemble d'articulation B (56) qui est conçu pour être monté sur un cadre de bicyclette,
- un sous-ensemble d'articulation P (58 ; 158 ; 258),
- un sous-ensemble parallélogramme (62) par lequel le sous-ensemble d'articulation B (56) et le sous-ensemble d'articulation P (58 ; 158 ; 258) sont reliés ensemble de manière mobile,
- un sous-ensemble de cage (60 ; 160 ; 260) dans laquelle une poulie de guidage de chaîne (68) et une poulie de tension de chaîne (66) sont maintenues en rotation, le sous-ensemble de cage (60 ; 160 ; 260) étant monté en rotation autour d'un axe P au niveau du sous-ensemble d'articulation P (58 ; 158 ; 258),
- un dispositif de détection d'angle de rotation (72-80 ; 172, 174, 276, 290) qui est conçu pour détecter et/ou afficher un angle de rotation (C) entre le sous-ensemble d'articulation P (58 ; 158 ; 258) et le sous-ensemble de cage (60 ; 160 ; 260),
**caractérisé en ce que** le dispositif de détection d'angle de rotation (72-80 ; 172, 174, 276, 290) présente un premier repère (74, 78 ; 174 ; 290) qui est prévu sur le sous-ensemble d'articulation P (58 ; 158 ; 258), et un deuxième repère (72, 76 ; 172 ; 288) qui est prévu sur le sous-ensemble de cage (60 ; 160 ; 260).

2. Dérailleur (54) selon la revendication 1, **caractérisé en ce que** le premier repère (74, 78 ; 174 ; 290) ou/et le deuxième repère (72, 76 ; 172 ; 288) sont réalisés par au moins l'un des moyens suivants :
- un autocollant,
- une impression,
- un élément moulé,
- un repère fabriqué au moyen d'un laser,
- une coloration du matériau du sous-ensemble d'articulation P ou/et du sous-ensemble de cage,
- un composant ajouté en plus.

3. Dérailleur (54) selon la revendication 1, **caractérisé en ce que** le dispositif de détection d'angle de rotation présente une aiguille entraînée (76 ; 276) qui indique un angle de rotation maximal entre le sous-ensemble d'articulation P (58 ; 258) et le sous-ensemble de cage (60 ; 260).

4. Dérailleur (54) selon la revendication 3, **caractérisé en ce que** l'aiguille entraînée (76 ; 276) est montée en rotation au niveau du sous-ensemble d'articulation P (58 ; 258), et **en ce que** le sous-ensemble de cage (60 ; 260) présente une saillie (80 ; 286) qui est conçue pour entraîner l'aiguille entraînée (76 ; 276) pendant une rotation du sous-ensemble de cage (60 ; 260) autour de l'axe P.

5. Dérailleur (54) selon la revendication 3, **caractérisé en ce que** l'aiguille entraînée (76 ; 276) est montée en rotation autour de l'axe P au niveau d'un des deux sous-ensembles composés du sous-ensemble d'articulation P (58 ; 258) et du sous-ensemble de cage (60 ; 260) par un palier à friction ayant une force de friction prédéterminée, et **en ce que** l'autre des deux composants présente un élément d'entraînement, en particulier la saillie (80 ; 286), qui est conçu pour entraîner l'aiguille entraînée (76 ; 276) pendant une rotation entre le sous-ensemble de cage (60 ; 260) et le sous-ensemble d'articulation P (58 ; 258).

6. Dérailleur (54) selon la revendication 3, **caractérisé en ce que** l'aiguille entraînée (76 ; 276) est réalisée sous la forme d'une bague concentrique par rapport à l'axe P.

7. Dérailleur (54) selon la revendication 1, **caractérisé en ce que** le dispositif de détection d'angle de rotation comprend :
- un capteur d'angle pour détecter une valeur d'angle indiquant l'angle de rotation (C) entre le sous-ensemble d'articulation P (58 ; 158 ; 258) et le sous-ensemble de cage (60 ; 160 ; 260), et
- un dispositif d'émission qui est conçu pour transmettre à un dispositif de réception une information de détection dépendant de la valeur d'angle.

8. Dérailleur (54) selon la revendication 1, **caractérisé en ce que** le dispositif de détection d'angle de rotation comprend :
- un capteur d'angle pour détecter une valeur d'angle indiquant l'angle de rotation entre le sous-ensemble d'articulation P (58 ; 158 ; 258) et le sous-ensemble de cage (60 ; 160 ; 260), et
- un moyen d'affichage électrique qui est réalisé sous la forme d'un moyen d'éclairage, en particulier d'une LED, et qui est conçu pour afficher une information de détection dépendant de la valeur d'angle.

9. Dérailleur (54) selon la revendication 1, **caractérisé en ce que** le sous-ensemble d'articulation B (56) est conçu pour être monté en pivotement autour d'un axe B (S) au niveau d'un cadre de bicyclette (12), l'axe B (S) s'étendant coaxialement à un essieu arrière (H) d'une bicyclette (10).

10. Dérailleur (54) selon la revendication 1, **caractérisé en ce que** le dérailleur comprend un dispositif de détection de vitesse de référence qui est conçu pour détecter et/ou afficher si le dérailleur (54) est réglé ou non sur un rapport de référence prédéterminé.

11. Dérailleur (54) selon la revendication 10, **caractérisé en ce que** le dispositif de détection de vitesse de référence est conçu pour détecter et/ou afficher une information concernant une position relative dans une direction parallèle à l'essieu arrière (H) entre au moins deux sous-ensembles composés du cadre de bicyclette (12), du sous-ensemble d'articulation B (56), du sous-ensemble parallélogramme (62), du sous-ensemble d'articulation P (58 ; 158 ; 258) et du sous-ensemble de cage (60 ; 160 ; 260).

12. Dérailleur (54) selon la revendication 10, **caractérisé en ce que** le dispositif de détection de vitesse de référence présente un repère qui est réalisé par au moins l'un des moyens suivants :
- un autocollant,
- une impression,
- un élément moulé,
- un repère fabriqué au moyen d'un laser,
- une coloration du matériau du sous-ensemble d'articulation P (58 ; 158 ; 258) ou/et du sous-ensemble de cage (60 ; 160 ; 260),
- un composant ajouté en plus,
ou/et **en ce que** le dispositif de détection de vitesse de référence présente un capteur d'angle ou un affichage LED.

13. Dérailleur (54) selon la revendication 10, **caractérisé en ce que** le dispositif de détection de vitesse de référence génère un signal qui indique si le dérailleur est réglé ou non sur un rapport de référence prédéterminé, et **en ce que** le signal est affiché par un moyen d'affichage électronique et/ou peut être transmis à un dispositif d'affichage.
